Europäisches Patentamt

European Patent Office

Office européen des brevets

(11) Publication number: **0 480 104 B1**

## EUROPEAN PATENT SPECIFICATION

(45) Date of publication of patent specification: **26.04.95**

(51) Int. Cl.6: **A23J 3/34**

(21) Application number: **90311110.2**

(22) Date of filing: **10.10.90**

The file contains technical information submitted after the application was filed and not included in this specification

(54) **Enzyme modified protein and process for its production.**

(43) Date of publication of application:
**15.04.92 Bulletin 92/16**

(45) Publication of the grant of the patent:
**26.04.95 Bulletin 95/17**

(84) Designated Contracting States:
**ES FR GB IT**

(56) References cited:
**FR-A- 2 186 193
FR-A- 2 338 001
US-A- 3 694 221
US-A- 4 757 007**

**WPIL / DERWENT, accession no. 88-087110, Derwent Publications Ltd, London, GB;& JP-A-63 036 797 (FUJI OIL K.K.)**

(73) Proprietor: **PROTEIN TECHNOLOGIES INTER-NATIONAL, INC.
Checkerboard Square
Saint Louis,
Missouri 63164 (US)**

(72) Inventor: **Shen, Jerome L.
5937 Keith Place
St. Louis,
Missouri 63109 (US)**

(74) Representative: **Tubby, David George et al
MARKS & CLERK,
57-60 Lincoln's Inn Fields
London WC2A 3LS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

The present invention relates to a process for the preparation of vegetable protein food products of controlled solubility and, more particularly, to a process for preparing a vegetable protein food product, especially a soy protein food product, of high solubility. The food products prepared by the process of this invention will generally have a high solubility and very little bitter or beany flavour, and will generally exhibit improved functional properties over previously known materials. These properties may be achieved without harsh chemical treatment or excessive hydrolysis, which could otherwise significantly reduce the functional properties of the protein.

The preparation and modification of vegetable protein products by a variety of processes is known, including the production of protein products from soy protein, as is the treatment of such products to improve various of their characteristics, for example as disclosed in US A-3 642 490, US A-3 694 221 and US A-2 232 052. By way of example, enzymatic processes for obtaining food materials from vegetable protein materials are well known; a typical process is disclosed in US A-2 232 052. The technique most commonly employed in enzymatic processes requires a lengthy reaction time, typically several hours, which has to be at a pH optimum for the enzyme used, and is most commonly conducted as a batch type operation. However, conventional processes have not conducted such hydrolysis under pH and other conditions which are effective to expose the core proteins of the protein substrate to hydrolysis. FR-A-2 338 001 discloses a method of the preparation of polypeptides which are soluble in a pH 2-7 aqueous solution by hydrolysing soya protein enzymatically at a pH from 7 to 10. We have now discovered that treatment under conditions which do expose and treat the core proteins is necessary if, as is desirable, solubility and organoleptic qualities are to be maximised. The process of this invention, which may be a semi-continuous type of operation or batch, uses a controlled pH with an enzymatic reaction partially to hydrolyze, deamidate and modify the protein reactant. The process of the present invention is capable of producing a product of unexpectedly superior functional properties and with a solubility which may be substantially 100%.

Prior processes of hydrolysing and/or deamidating vegetable protein materials, whilst producing a commercially useful product, have not been able to achieve solubilities above about 50 to 60% of the available protein since the core proteins of the vegetable protein material have been essentially untouched by the enzymatic action. Attempts to increase the solubility of the protein product, by increasing the harshness of the treatment, have not succeeded in increasing solubility, rather, instead, the nutritional and other functional properties of the protein were reduced.

We have now discovered an enzymatic method of processing vegetable protein, and particularly soybean protein materials, to form a desirably edible protein product that has the high solubility necessary to be functional but which has excellent foam and emulsion functionality.

By careful control of the process conditions, it is possible to obtain such a product which is also highly functional due to a controlled high solubility that enables excellent grade aqueous suspensions to be formed which exhibit excellent texture and are smooth, not chalky, lumpy or granular.

Thus, the present invention consists in a method of treating an isolated vegetable protein material by treating the material with a proteolytic enzyme at a pH above 7, characterised in that the protein has an insoluble protein core or globular fraction and the method comprises forming an aqueous slurry of the isolated vegetable protein material and subjecting the slurried protein to a controlled hydrolysis and deamidation, the treatment including adjusting the pH of the slurried protein material to between about 9 and 11, adding the proteolytic enzyme to the slurried protein material, the enzyme being added at a level of between about 0.01 and 5% by weight of the dry protein in the slurry, and reacting the treated slurry at a temperature and for a time sufficient both to partially hydrolyse and to partially deamidate the protein, the combined treatment being further effective to substantially uniformly hydrolyse and deamidate the protein across substantially the entire protein substrate, including the insoluble fraction of the substrate, without excessively hydrolysing the soluble fraction of the substrate, and to produce a treated protein having a molecular weight distribution (Mn) between about 800 and 4000, the treated protein being deamidated at a level of between about 5 to 48% and having a solubility in a pH 7 aqueous solution of between about 60 and 100%.

The method of present invention increases the solubility of the protein and increases the functional properties of the protein without producing a bitter flavour in the treated protein.

The product of the present invention can be used directly as a food and also will blend smoothly with products containing other flavourings without altering the character of the other flavourings.

The basic unique product obtained by the process of the present invention is one of excellent functionality and exceptional solubility. It is treated with a process involving heat, pH control and enzymatic

2

hydrolysis. The product uniquely has an optimum combination of properties not obtainable heretofore in having a high solubility, which may be above 50 or even above 60% and up to about 100% for a product formed from an isolated protein. Hence, it can be used as a food product in various forms, with a high protein content. It also can be selectively added to a wide variety of other food products to achieve special results, for example, it may be used as a protein fortifier which is added to an aqueous solution by the consumer. When added to cold milk, the material of the present invention exhibits excellent solubility characteristics, which may be essentially 100%. The mouthfeel and taste of the milk mixture containing the product of the present invention is excellent and it can provide a refreshing and nutritious drink, for example, of the instant breakfast type.

The process of the present invention preferably treats the protein material as an aqueous slurry with controlled, elevated pH and enzyme treatment at an elevated temperature. The pH chosen, in combination with the enzyme, makes the entire protein substrate available for enzyme hydrolysis and deamidation, including the core proteins present in the substrate. By careful regulation of the process, the degree of both solubility and deamidation of the resulting product can be controlled over a very wide range. The conditions of pH and temperature are chosen to prevent formation of LAL compounds (i.e. lysinal alanine compounds), for example less than about 300 ppm.

This invention was conceived and developed largely for soy protein materials because of the special problems encountered with such materials and because of their wide availability and reliable quality, which make them especially suitable for use as food materials. Therefore, it will be explained largely with respect to soy materials and has special application to such materials. However, it can be used for other protein materials in the broader aspects of the invention, and, in general, any edible protein material can be treated by the process of the present invention, for example, other vegetable (especially oilseed) materials, fish protein materials, microbial protein products or even, if desired, protein products derived from meat may be used.

The acceptance of vegetable protein materials, such as soybeans, peanuts, safflower, cottonseeds, sesame seeds, sunflower seeds, rapeseeds and others (any of which may be used in the process of the present invention), depends on modification of these materials to improve their functional properties. Extensive research has been conducted on these in an effort to develop useful food products. As a result, some of these materials are presently being processed to produce food products commonly called edible vegetable proteins. However, the functional properties, such as taste and solubility, and foam and emulsion forming properties of these materials is not satisfactory for many commercial food uses. The process of the present invention enables one to produce a novel protein material which has greatly improved solubility, without introduction of bitter flavours. Solubility can be as high as 100%. This result is achieved by an enzyme hydrolysis and partial deamidation reaction over substantially the entire protein substrate. Deamidation levels can be varied between 5 to 48%. The hydrolysis is preferably accomplished under ambient to elevated temperature conditions and under a controlled elevated pH which is effective to render the protein substrate soluble, including the core protein fractions, without degradation or excessive hydrolysis of the protein substrate, and in particular without excessive hydrolysis or degradation of the non-core fraction of the substrate.

The process of the present invention may be applied to the treatment of any protein materials, especially vegetable protein materials, regardless of the concentration of protein therein. However, it is preferably applied to the treatment of vegetable and other protein concentrates, and most especially of vegetable and other protein isolates, preferably soy protein materials, especially soy protein isolates.

It is a further advantage of the process of the present invention that the solubility of the product may be broadened to encompass a wide pH range. When the hydrolysis reaction of the present invention has progressed to the desired state, the reaction may be stopped by inactivating the enzyme, for example by heat, as is well known in the art. The conditions of the process are preferably controlled to minimize or prevent the formation of undesirable LAL compounds, in particular by maintaining the pH of the reaction below about 12.

Generally, the pH of the process is controlled to between about 9 to 11 during the process. These limits have been found to be effective. A preferred pH of about 10 has been found to be particularly effective. Control of the pH may be by use of conventional food grade bases and buffers, such as sodium hydroxide, sodium bicarbonate, ammonium carbonate, sodium tripolyphosphates, hydrochloric acid and other conventional reagents. The optimum pH may differ somewhat for each particular enzyme used, but the process is generally effective within this pH range. The temperature of the reaction may preferably vary from 10°C, e.g. room temperature, to 75°C, and the process is also generally effective within this temperature range. The optimum temperature conditions may also vary somewhat, preferably within this range, for any particular system. Likewise the reaction time may also preferably vary within an effective range of from 10 minutes to 4 hours (240 minutes) and may have different optimum values for a particular system of time, temperature, pH and particular enzyme, within the effective range.

The enzymes which are effective in the process of the present invention are generally those proteolytic enzymes which are commonly used for the hydrolysis of proteins and may be obtained from animal, plant and microbial sources. A variety of enzymes have proven satisfactory. These include papain, trypsin, ficin and a variety of bacterial and fungal proteases. The only limitation on the protease is that it be stable and not be inactivated by the pH used for the process.

The enzyme material may preferably be added at a level of from 0.01 to 5.0% by weight of protein material (dry basis), depending on the temperature and time conditions employed, the activity of the enzymes, and the degree of hydrolysis desired. (Enzyme activity may be defined as the amount of enzyme required to produce a standard amount of tyrosine from casein and maltose from starch under standard conditions. ) Levels of enzyme above 1.0% by weight may be used, but the cost may become prohibitive for some enzyme materials. At levels below 0.05% the enzymatic reaction may proceed too slowly to be commercially viable with some enzyme systems.

The treated protein slurry and enzyme reactant mass are typically and preferably reacted in a holding tank to provide a sufficient time lag for the reaction to proceed substantially to completion. When the enzymatic reaction has proceeded for a sufficient length of time, the reaction is stopped, e.g. by heating the slurry to a temperature sufficient to inactivate the enzymes. Temperatures above about 180°F (82°C) are normally sufficient to inactivate the enzyme activity. The heating step can be accomplished by passing the reacted material through a heat exchanger, by a jet cooking step, or by most conventional heating operations. Following inactivation, the pH of the product can be adjusted to a desired level or the pH can be adjusted prior to inactivation.

The treated protein has a molecular weight (Mn) of from 800 to 4000.

The resulting slurried product can be used directly for food products. It is an attractive light coloured product. Alternatively it can be dried, with the dried product having excellent solubility in an aqueous medium.

If the slurry is dried, it is preferably flash dried because of the uniform fine, powdered product obtained, the economical continuous processing afforded thereby, and the excellent solubility characteristics of the powder. Of the flash drying techniques, spray drying is usually used. The product may be freeze dried, but this is more costly. The dried powder is capable of rapid simple rehydration to form a suspension simply by adding water and stirring, because of its high solubility. The product may be used as a substitute for dairy product derivatives, even dried skimmed milk, for a variety of purposes. The product has an excellent smooth texture and taste. The product stays in solution and does not settle out at the bottom of the container when mixed in an aqueous suspension.

The invention is further illustrated by the following non-limiting Examples.


EXAMPLE 1


860 pounds (390 kg) of isolated soy protein aqueous curd having a solids content of 14% by weight, was treated by adjusting the pH to a value of 8.0 using a 50% w/v aqueous solution of sodium hydroxide and was heated to 305°F (152°C) using a jet cooker. The duration of heating was about 9 seconds. Following this heat treatment the curd was cooled to 104°F (40°C). The cooled curd was adjusted to a pH value of 10 by the addition of a 50% w/v aqueous solution of sodium hydroxide, whilst rapidly stirring. 1.5% papain (Amano) based on the dry weight of the protein was added as a 10% aqueous slurry and was mixed with rapid stirring. The mixture was then reacted for 60 minutes while maintaining the pH at a value of 10 by the addition of a 50% w/v aqueous solution of sodium hydroxide. The reacted mixture was then adjusted to a pH value of 7. 5 - 7. 9 by the addition of concentrated aqueous hydrochloric acid and heated to inactivate the enzyme. Inactivation was accomplished by heating the mixture to 305°F (152°C). The duration of heating was about 9 seconds and the total time required to inactivate the reaction mixture was about 43 minutes. The inactivated mixture was then spray dried. The properties of the spray dried material are reported in Table 1.


EXAMPLE 2


The jet cooked curd of Example 1 was cooled to 114°F (46°C), was adjusted to pH 10 and was treated with 2.0% pancreatin (Rohm COROLASE®), on a dry curd basis, as described in Example 1. The pH was maintained at a value of 10 during the 37 minutes reaction time for the mixture. The pH of the reaction mixture was then adjusted to a value of 7. 5, after which the product was heat inactivated and spray dried as described in Example 1. The product properties are reported in Table 1.

EXAMPLE 3

The jet cooked curd of Example 1 was cooled to 114°F (46°C), adjusted to a pH value of 10 by the addition of a 50% w/v aqueous solution of sodium hydroxide, and treated with 5% alcalase 2. 4 L, (Novo Laboratories), on a dry curd basis. The mixture was then reacted as described in Example 1. The pH was maintained at a value of 10 during the 82 minute reaction time for the mixture. The pH of the reaction mixture was then adjusted to a value of 7. 5, after which the product was heat inactivated and spray dried as described in Example 1. The product properties are reported in Table 1.

EXAMPLE 4

The room temperature curd of Example 1 was adjusted to a pH value of 10 and treated with 1. 5% papain, (Amano), on a dry curd basis, as described in Example 1. The pH was maintained at a value of 10 during the 52 minute reaction time for the mixture. The pH of the reaction mixture was then adjusted to a value of 7. 5, after which the product was heat inactivated and spray dried as described in Example 1. The product properties are reported in Table 1.

EXAMPLE 5

The room temperature curd of Example 1 was cooled to 10°C, adjusted to pH 10 and treated with 1. 5% pancreatin, (Rohm COROLASE®), on a dry curd basis, as described in Example 1. The pH was maintained at a value of 10 during the 60 minute reaction time for the mixture. The pH of the reaction mixture was then adjusted to a value of 7. 5, after which the product was heat inactivated and freeze dried. The product properties are reported in Table 1.

EXAMPLE 6

The room temperature curd of Example 1 was adjusted to a pH value of 10 and treated with 0. 6% alcalase 2. 4 L, (Novo Laboratories), on a dry curd basis, as described in Example 1. The pH was maintained at a value of 10 during the 20 minute reaction time for the mixture. The pH of the reaction mixture was then adjusted to a value of 7. 5, after which the product was heat inactivated and freeze dried. The product properties are reported in Table 1.

EXAMPLE 7

The room temperature curd of Example 1 was adjusted to a pH value of 10 and treated with 0. 25% papain, on a dry curd basis, as described in Example 1. The pH was maintained at a value of 10 during the 90 minute reaction time for the mixture. The pH of the reaction mixture was then adjusted to 7. 5, after which the product was heat inactivated and freeze dried. The product properties are reported in Table 1.

EXAMPLE 8

The room temperature curd of Example 1 was adjusted to a pH value of 9 and treated with 1.0% papain, on a dry curd basis, as described in Example 1. The pH was maintained at a value of 9 during the 90 minute reaction time for the mixture. The pH of the reaction mixture was then adjusted to 7. 5, after which the product was heat inactivated and freeze dried. The product properties are reported in Table 1.

EXAMPLE 9

The room temperature curd of Example 1 was adjusted to a pH value of 11 and treated with 1. 0% papain, on a dry curd basis, as described in Example 1. The pH was maintained at a value of 11 during the 90 minute reaction time for the mixture. The pH of the reaction mixture was then adjusted to 7. 5, after which the product was heat inactivated and freeze dried. The product properties are reported in Table 1.

EXAMPLE 10

The room temperature curd of Example 1 was heated to 148°F (65°C), adjusted to a pH value of 10 and treated with 1. 0% papain, on a dry curd basis, as described in Example 1. The pH was maintained at a value of 10 during the 45 minute reaction time for the mixture. The pH of the reaction mixture was then adjusted to 7. 5, after which the product was heat inactivated and freeze dried. The product properties are reported in Table 1.

EXAMPLE 11

The room temperature curd of Example 1 was heated to 194°F (90°C), for 5 minutes, cooled to room temperature, adjusted to a pH value of 10 and treated with 0. 25% trypsin (Sigma T8253), on a dry curd basis, as described in Example 1. The pH was maintained at a value of 10 during the 30 minute reaction time for the mixture. The pH of the reaction mixture was then adjusted to 7. 5, after which the product was heat inactivated and freeze dried. The product properties are reported in Table 1.

EXAMPLE 12

The jet cooked curd of Example 1 was cooled to room temperature, diluted to 10% solids with a buffer of pH 10, and treated with 1. 0% chymotrypsin (Sigma C4129), on a dry curd basis, as described in Example 1. The pH was maintained at a value of 10 during the 120 minute reaction time for the mixture. The pH of the reaction mixture was then adjusted to 7. 5, after which the product was heat inactivated and freeze dried. The product properties are reported in Table 1.

EXAMPLE 13

The jet cooked curd of Example 1 was adjusted to a pH value of 10 and treated with 1. 5% papain, on a dry curd basis, as described in Example 1. The pH was maintained at a value of 10 during the 30 minute reaction time for the mixture. At the end of this time, the product was heat inactivated at pH 10 and spray dried as described in Example 1. The product properties are reported in Table 1.

EXAMPLE 14

The room temperature curd of Example 1 was adjusted to a pH value of 10 and treated with 0. 75% papain, on a dry curd basis. As described in Example 1, the enzyme and sodium hydroxide were added in line in a continuous system. The pH was maintained at a value of 10 by the in line addition. The reaction took place in two tanks with a 15 minute residence time in the first tank and a 45 minute reaction time in the second tank. The pH of the reaction mixture was then adjusted in line to a value of 7. 5. The product was heat inactivated and spray dried as described in Example 1. The product properties are reported in Table 1.

COMPARATIVE EXAMPLE 1

For purposes of comparison, the jet cooked curd of Example 1 was adjusted to a pH value of 7 and treated with 1. 0% bromelin. The pH was allowed to drop during hydrolysis. After 30 minutes of reaction the enzyme was heat inactivated and spray dried as described in Example 1. The product properties are reported in Table 1.

COMPARATIVE EXAMPLE 2

For purposes of comparison, the room temperature curd of Example 1 was treated by a conventional process as described in U.S. patent 3,694,221. The curd, at 12% solids was adjusted to a pH value of 7.0 and jet cooked to 305°F (152°C) for 9 seconds, after which it was cooled to 120°F (49°C). The pH of the curd was then raised to a value of 8. 5 and the curd was treated with 1. 0% alcalase, on a dry solids basis. The mixture was reacted for 120 minutes and then jet cooked to 305°F (152°C) for 9 seconds to inactivate the enzyme.

The results are shown in Table 1.

TABLE 1:   SUMMARY OF PROPERTIES

| EXAMPLE Number | Enzyme | $\%^a$ Deamidation | TNBS[b] | Bitterness[e] |
|---|---|---|---|---|
| 1 | Papain | 26 | 57 | 1. 3 |
| 2 | Pancreatin | 25 | 114 | 1. 1 |
| 3 | Alcalase | 28 | 182 | 5. 3 |
| 4 | Papain | 16 | 45 | 1. 3 |
| 5 | Pancreatin | 20 | 33 | |
| 6 | Alcalase | 28 | 164 | |
| 7 | Papain | 9 | 42 | |
| 8 | Papain | 14 | − | − |
| 9 | Papain | 16 | − | − |
| 10 | Papain | 18 | 73 | − |
| 11 | Trypsin | 14 | 29 | − |
| 12 | Chymotrypsin | 29 | − | − |
| 13 | Papain | 26 | 54 | − |
| 14 | Papain | 11 | 45 | − |
| C. E.  1 * | Bromelain | | 60 | 7. 1 |
| C. E.  2 * | Alcalase | | 196 | − |

*   Comparative Examples

TABLE ·1:    SUMMARY OF PROPERTIES (continued)

| EXAMPLE Number | Enzyme | Solubility (%) [c] | | MWD [d] | |
|---|---|---|---|---|---|
| | | pH 7.0 | pH 5.5 | Mn | Mw |
| 1 | Papain | 74 | 42 | 2615 | 16,052 |
| 2 | Pancreatin | 79 | 57 | 1204 | 8,000 |
| 3 | Alcalase | 88 | 88 | 1069 | 6,727 |
| 4 | Papain | 61 | 22 | 3349 | 22,650 |
| 5 | Pancreatin | - | - | - | - |
| 6 | Alcalase | 82 | 74 | 1909 | 10,333 |
| 7 | Papain | - | - | - | - |
| 8 | Papain | - | - | - | - |
| 9 | Papain | - | - | - | - |
| 10 | Papain | | | 2274 | 11,573 |
| 11 | Trypsin | 62 | 10 | - | - |
| 12 | Chymotrypsin | - | - | - | - |
| 13 | Papain | 96 | 41 | - | - |
| 14 | Papain | 68 | 24 | - | - |
| C.E. 1 | Bromelain | 37 | 28 | 2599 | 15,585 |
| C.E. 2 | Alcalase | 62 | 57 | - | - |

a    The diffusion method of Conway and O'Malley (J. Biochem, 36:655, 1942) is used to measure $NH_3$ released after a 1.25% product slurry in 3N HCl has been heated in a sealed vial for 3 hours at 110°C. The reference for zero percent deamidation is 18.3mg $NH_3$ per g of undeamidated protein.

b    Moles end groups per $10^5$g of protein as measured by the method of R.Fields (Biochem, J., 124, 581, 1971). Unhydrolyzed soy proteins have average TNBS of 30.

c    Method of J.L. Shen, Cereal Chem. 53:902 (1976).

d    Molecular weight distribution as determined by HPLC in 6M GuHCl and dithiothreitol using a TSK 2000 size exclusion column (Pharmacia, Pleasant Hill, CA).
Mn = number average molecular weight in daltons.
Mw = weight average molecular weight in daltons.

e    Bitterness scores from trained panel tasting 3% slurries in water at pH 7.0 and 122°F.
0 = least bitter 10 = most bitter.

As shown by Table 1, the process of the present invention enables the person skilled in the art to choose the desired combination and degree of characteristics of the resulting product. For example, the practitioner can choose, within limits, the degree of solubility and the degree of deamidation desired for a particular resulting product, as the end use requires.

The functional properties of representative products made by the process of the present invention are summarized in Tables 2 - 4.

TABLE 2

| pH --Solubility Profile | | | |
|---|---|---|---|
| % Protein Soluble [a] | | | |
| pH | Example 4 | Example 2 | Example 3 | Comparative Example 1 |
|---|---|---|---|---|
| 2.0 | 63% | 83% | 84% | 19% |
| 4.0 | 22% | 55% | 80% | 18% |
| 4.5 | 19% | 55% | 73% | 21% |
| 5.0 | 22% | 58% | 82% | 23% |
| 6.0 | 35% | 64% | 86% | 30% |
| 7.0 | 61% | 79% | 88% | 37% |
| 9.0 | 68% | 87% | 88% | 38% |

a Solubility method of J. L. Shen, Cereal Chem. 53: 902 (1976)

TABLE 3

| Foam Density [a] | | |
|---|---|---|
| Example 4 | 0.092 g/cc | 0.099 g/cc |
| Example 2 | 0.061 g/cc | 0.074 g/cc |
| Example 3 | 0.065 g/cc | 0.060 g/cc |
| Comp. Example 1 | 0.084 g/cc | 0.085 g/cc |

a The method for preparing the foam is as follows: Fifteen grams of product is slurried in 135 g of water and whipped with a wire whip for 6 minutes at highest speed (10) using a Kitchen Aid Model K5A mixer. After whipping, the density is measured with a 5 oz Solo cup.

TABLE 4

| Emulsion Capacity at pH 7[a] | |
|---|---|
| Product | Emulsion Capacity (ml oil/g Product) |
| Example 4 | 131 |
| Example 2 | 98 |
| Example 3 | 52 |
| Comp. Example 1 | 113 |

a The method is as follows: 100 ml of a 0. 5% product in water slurry is transferred to a 1 litre blender bowl. Soy bean oil at a constant flow rate of 49 ml/min is blended into the slurry with a Waring Blender (Model 70129) at 15,300 rpm until a phase inversion from oil in water emulsion to water in oil emulsion occurs. The end point is detected by a loss in conductance. The emulsion capacity is calculated after subtracting out a blank value for water.

**Claims**

1.  A method of treating an isolated vegetable protein material having an insoluble protein core or globular fraction comprising forming an aqueous slurry of the isolated vegetable protein material and subjecting the slurried protein to a controlled hydrolysis and deamidation, the treatment including adjusting the pH of the slurried protein material to between 9 and 11, adding the proteolytic enzyme to the slurried protein material, the enzyme being added at a level of between 0.01 and 5% by weight of the dry protein in the slurry, and reacting the treated slurry at a temperature and for a time sufficient both to partially hydrolyse and to partially deamidate the protein, the combined treatment being further effective to substantially uniformly hydrolyse and deamidate the protein across substantially the entire protein substrate, including the insoluble fraction of the substrate, without excessively hydrolysing the soluble fraction of the substrate, and to produce a treated protein having a molecular weight distribution (Mn) between 800 and 4000, the treated protein being deamidated at a level of between about 5 to 48% and having a solubility in a pH 7 aqueous solution of between 60 and 100%.

2.  A method according to Claim 1, wherein the treated slurry is reacted at a temperature of between 10 and 75°C.

3.  A method according to Claim 1 or 2, wherein the treated slurry is reacted for a time of between 10 and 240 minutes.

4.  A method according to any preceding claim, in which the enzyme is an animal, plant or microbial enzyme.

5.  A method according to any preceding claim, in which the pH is adjusted to a value of about 10.

6.  A method according to any preceding claim, in which the reacted slurry is subsequently heated to inactivate the enzyme and stop the reaction.

7.  A method according to any preceding claim, in which the solubility of the protein is above 80%.

8.  A method according to claim 7, in which the solubility of the protein is above 90%.

9.  A method according to any preceding claim, in which the treated protein is subsequently dried.

10. A method according to claim 9, in which the treated protein is spray dried.

**11.** A method according to any preceding claim, in which the protein material is a vegetable protein material.

**12.** A method according to claim 11, in which the protein material is an oilseed protein material.

**13.** A method according to claim 11, in which the protein material is a soy protein material.

**14.** A method according to claim 13, in which the protein material is an isolated soy protein.

**Patentansprüche**

**1.** Verfahren zur Behandlung eines isolierten pflanzlichen Proteinmaterials, das einen unlöslichen Proteinkern oder eine globuläre Fraktion hat, welches folgende Schritte aufweist: Bildung einer wässrigen Aufschlämmung des isolierten pflanzlichen Proteinmaterials und Ausführen einer kontrollierten Hydrolyse und Desamidierung an dem aufgeschlämmten Protein, wobei die Behandlung die Abstimmung des pH-Wertes des aufgeschlämmten Proteinmaterials auf einen Wert zwischen 9 und 11 einschließt, Zusatz eines proteolytischen Enzyms zu dem aufgeschlämmten Proteinmaterial, wobei das Enzym mit einem Pegel zwischen 0.01 und 5 Gew.-% des trockenen Proteins in der Aufschlämmung zugesetzt wird, und Reagieren der behandelten Aufschlämmung bei einer Temperatur und über eine Zeitspanne, die ausreichend sind, um das Protein sowohl partiell zu hydrolysieren als auch partiell zu desamidieren, wobei die kombinierte Behandlung außerdem bewirkt, daß das Protein im wesentlichen über dem gesamten Proteinsubstrat, einschließlich der unlöslichen Fraktion des Substrats, im wesentlichen gleichmäßig hydrolysiert und desamidiert wird, ohne daß die lösliche Fraktion des Substrats übermäßig hydrolysiert wird, und daß ein behandeltes Protein mit einer Verteilung der relativen Molekülmasse (Mn) zwischen 800 und 4000 erzeugt wird, wobei das behandelte Protein bei einem Pegel zwischen etwa 5 und 48% desamidiert ist und in einer wässrigen Lösung mit einem pH-Wert von 7 eine Löslichkeit zwischen 60 und 100% hat,

**2.** Verfahren nach Anspruch 1, bei dem die behandelte Aufschlämmung bei einer Temperatur zwischen 10° und 75° C reagiert wird.

**3.** Verfahren nach Anspruch 1 oder 2, bei dem die behandelte Aufschlämmung über eine Zeitspanne zwischen 10 und 240 Minuten reagiert wird.

**4.** Verfahren nach einem der vorhergehenden Ansprüche, bei dem das Enzym ein tierisches, pflanzliches oder mikrobielles Enzym ist.

**5.** Verfahren nach einem der vorhergehenden Ansprüche, bei dem der pH-Wert auf einen Wert von etwa 10 abgestimmt wird.

**6.** Verfahren nach einem der vorhergehenden Ansprüche, bei dem die reagierte Aufschlämmung anschließend erhitzt wird, um das Enzym zu inaktivieren und die Reaktion zu stoppen.

**7.** Verfahren nach einem der vorhergehenden Ansprüche, bei dem die Löslichkeit des Proteins über 80% liegt.

**8.** Verfahren nach Anspruch 7, bei dem die Löslichkeit des Proteins über 90% liegt.

**9.** Verfahren nach einem der vorhergehenden Ansprüche, bei dem das behandelte Protein anschließend getrocknet wird.

**10.** Verfahren nach Anspruch 9, bei dem das behandelte Protein sprühgetrocknet wird.

**11.** Verfahren nach einem der vorhergehenden Ansprüche, bei dem das Proteinmaterial ein pflanzliches Proteinmaterial ist.

**12.** Verfahren nach Anspruch 11, bei dem das Proteinmaterial ein Ölsaaten-Proteinmaterial ist.

**13.** Verfahren nach Anspruch 11, bei dem das Proteinmaterial ein Sojabohnenöl-Proteinmaterial ist.

**14.** Verfahren nach Anspruch 13, bei dem das Proteinmaterial ein isoliertes Sojabohnenöl-Protein ist.

**Revendications**

**1.** Procédé de traitement d'un produit de protéine végétale isolée possédant un noyau de protéine ou une fraction globulaire insolubles, comprenant la formation d'une suspension épaisse du produit de protéine végétale isolée et l'exposition de la protéine sous forme de suspension épaisse à une hydrolyse et une désamidification contrôlées, le traitement englobant l'ajustement du pH du produit de protéine sous forme de suspension épaisse dans un intervalle allant de 9 à 11, l'addition de l'enzyme protéolytique au produit de protéine sous forme de suspension épaisse, l'enzyme ajoutée représentant entre environ 0.01 et 5% en poids de la protéine sèche dans la suspension épaisse, et la mise en réaction de la suspension épaisse traitée à une température et pendant une durée suffisantes pour entraîner une hydrolyse partielle et une désamidification partielle de la protéine, le traitement combiné permettant en outre une hydrolyse et une désamidification pratiquement uniformes de la protéine à travers pratiquement l'ensemble du substrat de protéine, englobant la fraction insoluble du substrat, sans entraîner une hydrolyse excessive de la fraction soluble du substrat, et de produire une protéine traitée ayant une répartition du poids moléculaire (Mn) comprise entre 800 et 4000, la protéine traitée étant soumise à une désamidification à un niveau compris entre 5 et 48% et ayant une solubilité dans une solution aqueuse à pH 7 comprise entre environ 60 et 100%.

**2.** Procédé selon la revendication 1, dans lequel la suspension épaisse traitée est mise en réaction en présence d'une température comprise entre 10 et 75°C.

**3.** Procédé selon les revendications 1 ou 2, dans lequel la suspension épaisse traitée est mise en réaction pendant une durée d'environ 10 et 240 minutes.

**4.** Procédé selon l'une quelconque des revendications précédentes, dans lequel l'enzyme est une enzyme animale, végétale ou microbienne.

**5.** Procédé selon l'une quelconque des revendications précédentes, dans lequel le pH est ajusté à une valeur d'environ 10.

**6.** Procédé selon l'une quelconque des revendications précédentes, dans lequel la suspension épaisse mise en réaction est ensuite chauffée pour désactiver l'enzyme et pour arrêter la réaction.

**7.** Procédé selon l'une quelconque des revendications précédentes, dans lequel la solubilité de la protéine est supérieure à 80%.

**8.** Procédé selon la revendication 7, dans lequel la solubilité de la protéine est supérieure à 90%.

**9.** Procédé selon l'une quelconque des revendications précédentes, dans lequel la protéine traitée est ensuite séchée.

**10.** Procédé selon la revendication 9, dans lequel la protéine traitée est séchée par pulvérisation.

**11.** Procédé selon l'une quelconque des revendications précédentes, dans lequel le produit de protéine est un produit de protéine végétale.

**12.** Procédé selon la revendication 11, dans lequel le produit de protéine est un produit de protéine de graines oléagineuses.

**13.** Procédé selon la revendication 11, dans lequel le produit de protéine est un produit de protéine de soja.

**14.** Procédé selon la revendication 13, dans lequel le produit de protéine est une protéine isolée de soja.